# EUROPÄISCHE PATENTSCHRIFT

(11) **EP 0 766 805 B1**
(45) Veröffentlichungstag und Bekanntmachung des Hinweises auf die Patenterteilung: **22.04.1998**
(21) Anmeldenummer: 95924885.7
(22) Anmeldetag: 20.06.1995
(51) Int. Cl.: F16L 37/084, F17C 13/12

(54) **SICHERHEITSVERSCHLUSS, INSBESONDERE FÜR FAHRZEUG-GASTANKS**
SAFETY LOCK, ESPECIALLY FOR VEHICLE FUEL TANKS
FERMETURE DE SECURITE, NOTAMMENT POUR RESERVOIR DE CARBURANT DE VEHICULE

(30) Priorität: 20.06.1994 DE 9409956 U
(43) Veröffentlichungstag der Anmeldung: 09.04.1997
(73) Patentinhaber: WEH GmbH, VERBINDUNGSTECHNIK, D-89257 Illertissen (DE)
(72) Erfinder: WEH, Wolfgang, D-89257 Illertissen (DE); WEH, Erwin, D-89257 Illertissen (DE)
(74) Vertreter: Fiener, Josef
(86) Internationale Anmeldenummer: EP9502388
(87) Internationale Veröffentlichungsnummer: WO9535459

(56) Entgegenhaltungen:
- DE-U- 9 012 886
- DE-U- 9 216 647
- DE-U- 9 308 091
- US-A- 4 774 983

## Beschreibung

Die Erfindung betrifft einen Sicherheitsverschluß, insbesondere für Fahrzeug-Gastanks gemäß den oberbegrifflichen Merkmalen des Patentanspruches 1.

Ein derartiger druckdichter Sicherheitsverschluß ist aus dem DE-GM 92 16 647 bekannt. Dieser druckdichte Sicherheitsverschluß, der insbesondere für Anschlußnippel von Kraftfahrzeug-Gastanks geeignet ist, weist einen Stopfen mit einem angeformten, in die Öffnung des Anschlußnippels einsetzbaren Dichtabschnitt und eine an der Außenseite des Stopfens angeordnete Arretiereinrichtung, insbesondere in Form von Spannzangen auf, wodurch der an den Anschlußnippel angesetzte kappenförmige Sicherheitsverschluß den Anschlußnippel umgreift. Der Sicherheitsverschluß weist zum vereinfachten Abkuppeln weiterhin eine Entlüftungseinrichtung auf, die mit der Öffnung des Anschlußnippels im Bereich des Dichtabschnittes in Verbindung steht. Mit einer derartigen Entlüftungseinrichtung, insbesondere in Form einer Entlüftungsschraube oder eines federbelasteten Entlüftungsventils können auf die Steckkupplung wirkende Drücke abgebaut oder zumindest reduziert werden, die beispielsweise durch eine beschädigte Dichtung des Anschlußnippels auftreten können, und ein einfaches Abziehen des Sicherheitsverschlusses erschweren oder gar unmöglich machen.

Dieser druckdichte Sicherheitsverschluß hat sich insbesondere als Schutzkappe für Anschlußnippel an Kraftfahrzeug-Gastanks bewährt, da hierdurch zuverlässig verhindert werden kann, daß aus einem vollgetankten Fahrzeug Gas entweichen kann und damit hochexplosive Gasmischungen entstehen könnten, die leicht entzündlich sind und insbesondere in Tiefgaragen zu einem hohen Sicherheitsrisiko führen könnten.

Wie bereits oben angedeutet, ist in dem bekannten druckdichten Sicherheitsverschluß eine Entlüftungseinrichtung vorgesehen, um hierdurch Drücke im Anschlußbereich reduzieren oder abbauen zu können, die ein einfaches Abziehen des Sicherheitsverschlusses erschweren. Hierbei besteht jedoch die Gefahr, daß eine Bedienperson vergißt, das Entlüftungsventil zur Druckreduzierung zu betätigen und gewaltsam versucht, die Betätigungsvorrichtung in der bevorzugten Ausführung als Schiebemuffe gewaltsam zurückzuziehen. Stärkeren Personen kann dies durchaus gelingen, auch wenn aufgrund einer schadhaften Dichtung innerhalb des Sicherheitsverschlusses ein relativ hoher Druck herrscht. Hierdurch besteht dann die Gefahr, daß bei gewaltsam zurückgezogener Schiebemuffe und damit entriegelter Arretierungsvorrichtung der Sicherheitsverschluß aufgrund des im Anschlußbereich herrschenden Flüssigkeits- oder Gasdruckes weggeschleudert wird, und somit ernsthafte Verletzungen verursachen könnte. Darüberhinaus werden bei derartigen Anschluß- oder Übergangsdrücken, die mit entsprechender Kraftaufwendung gerade noch ein Zurückziehen der Schiebemuffe ermöglichen, die Kontaktflächen der Arretierungseinrichtung und die komplementär geformten Umgriffsflächen des Anschlußnippels übermäßig beansprucht, so daß trotz einer gehärteten Ausführung der Spannzangen eine übermäßige Abnutzung an den in Kontakt stehenden Teilen der Arretierungsvorrichtung bzw. des Anschlußnippels auftreten kann. Auch die als Betätigungseinrichtung bevorzugt vorgesehene Schiebemuffe unterliegt hierbei einem erhöhten Verschleiß.

Demzufolge liegt der Erfindung die Aufgabe zugrunde, einen gattungsgemäßen Sicherheitsverschluß hinsichtlich Sicherheit und Bedienkomfort zu verbessern.

Diese Aufgabe wird gelöst durch einen Sicherheitsverschluß mit den Merkmalen des Anspruches 1.

Durch den im Innern des Sicherheitsverschlusses axial beweglich geführten Kolben wird im Zusammenwirken mit einem Verriegelungselement, bevorzugt einer Verriegelungskugel die Verriegelung der Betätigungsvorrichtung, insbesondere der Schiebemuffe erreicht, so daß schon bei relativ niedrigem, noch auf die Kupplung wirkenden Druck von z. B. 6-8 bar bei Auftreten von Leckgas im Anschlußbereich des Anschlußnippels eine Betätigung und damit Abziehen des Sicherheitsverschlusses formschlüssig und damit zuverlässig verhindert wird. Dieser Ansprechdruck des Verriegelungselementes läßt sich hierbei durch die Wahl einer gegen die Bewegung des Kolbens wirkenden Feder auf einfache Weise auf einen noch ungefährlichen Druck einstellen und definieren. Durch die formschlüssige Verriegelung mittels des Verriegelungselementes wird die Bedienperson gezwungen, bei einer über dem definierten, noch ungefährlichen Druck auftretenden Verriegelung des Betätigungselementes die Entlüftungseinrichtung zur Druckreduzierung auf jeden Fall zu bedienen, so daß die Bediensicherheit vollständig gewährleistet ist. Durch die damit geschaffene Möglichkeit einer absolut zuverlässigen Verriegelung der Betätigungsvorrichtung ab einem definierten, auf den Sicherheitsverschluß wirkenden Anschluß- oder Leckgasdruck läßt sich die Betätigungseinrichtung insgesamt einfacher und leichter bauen. So kann beispielsweise die bevorzugt vorgesehene Schiebemuffe komplett als Kunststoffspritzgußteil ausgeführt werden, ohne daß Metalleinlagen zur Sicherheit gegen zu hohe gewaltsame Betätigungskräfte vorgesehen sein müßten.

Weiterhin ist von Vorteil, daß durch die axiale Verschiebebewegung des Kolbens ein Indikatorbolzen zur Anzeige des in dem Anschlußbereich herrschenden Anschluß- oder Leckgasdruckes vorgesehen sein kann, so daß der Benutzer beispielsweise über Verschleißerscheinungen an den Dichtungen des Anschlußnippels informiert wird. Bevorzugt ist dieser Indikatorbolzen zugleich als Druckknopf für das Entlüftungsventil vorgesehen, wodurch sich eine besonders einfache Bedienung ergibt.

Weitere vorteilhafte Ausgestaltungen sind Gegenstand der abhängigen Ansprüche.

Nachfolgend wird die Erfindung an Hand von zwei in der Zeichnung dargestellten Ausführungsbeispielen näher erläutert und beschrieben. Hierbei zeigen:
- Fig. 1: ein bevorzugtes Ausführungsbeispiel eines druckdichten Sicherheitsverschlusses in Halbschnitt in einer die Betätigung und Entriegelung erlaubenden Stellung;
- Fig. 2: den Sicherheitsverschluß gemäß Fig. 1, jedoch in einer die Betätigung verriegelnden Stellung bei übermäßig hohem Leckgasdruck; und
- Fig. 3: eine abgewandelte Ausführungsform mit einer Fluidzuleitung.

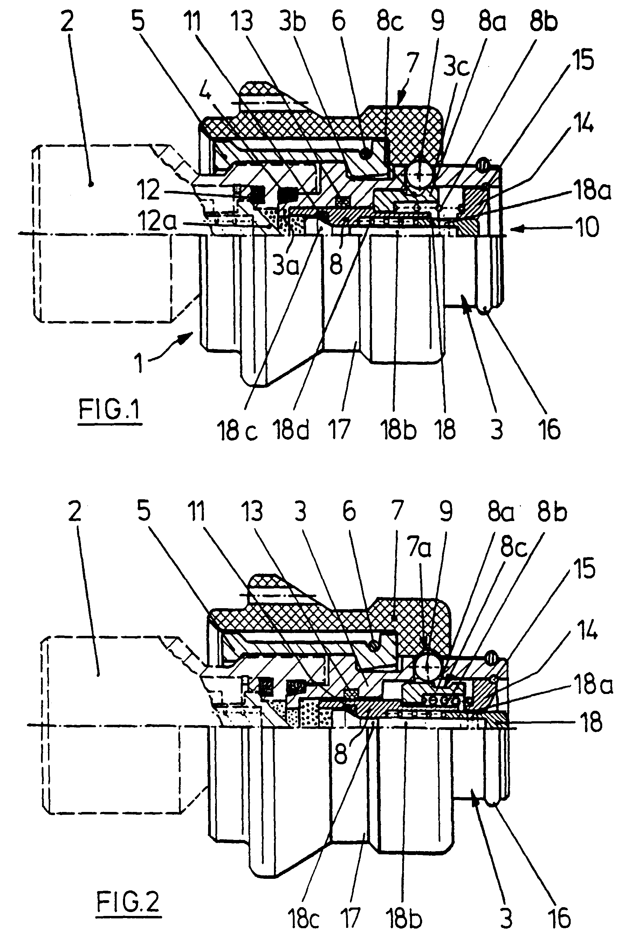

In Fig. 1 ist ein druckdichter Sicherheitsverschluß 1 im Halbschnitt dargestellt, der an einen Anschlußnippel 2 eines Kraftfahrzeug-Gastanks angeschlossen werden kann. Der Sicherheitsverschluß 1 weist einen im wesentlichen hülsenförmigen Stopfen 3 auf, dessen vorderer Dichtabschnitt 3a in eine in Strichlinien dargestellte Nippelöffnung des Anschlußnippels 2 eingesetzt werden kann. Der Anschlußnippel 2 ist zur Verdeutlichung im Anschlußbereich ebenfalls teilweise geschnitten dargestellt und weist zum Dichtabschnitt 3a des Stopfens 3 eine Dichtung 4 auf. Die Dichtung 4 kann jedoch auch ergänzend oder alternativ am Dichtabschnitt 3a angeordnet sein. Im Inneren des Anschlußnippels 2 ist zudem aus Sicherheitsgründen eine weitere Dichtung 12 vorgesehen, die mit einem kegelförmigen, federbeaufschlagten Ventil 12a zusammenwirkt.

An der Außenumfangsseite des Stopfens 3 ist eine Arretiereinrichtung 5 vorgesehen, durch die der an den Anschlußnippel 2 angesetzte Sicherheitsverschluß 1 formschlüssig und lösbar verbunden werden kann. Die Arretierungseinrichtung 5 ist bevorzugt durch Spannzangen gebildet, die mit einer vorderen Wulst den Anschlußnippel 2 umgreifen und an ihrem, hier rechten Ende an einer Lagerstelle, insbesondere einem Einstich 3b an der Außenfläche des Stopfens 3 verschwenkbar gelagert sind. Die Spannzangen der Arretierungsvorrichtung 5 sind hierbei durch eine Ringfeder 6 in Aufspreizrichtung an dieser Lagerstelle vorgespannt. Es sei darauf hingewiesen, daß anstelle der hier dargestellten Spannzangen auch Kugeln oder ähnliche Arretierungselemente zur lösbaren Verbindung des Sicherheitsverschlusses 1 mit dem Anschlußnippel 2 vorgesehen sein können.

Die Ent- bzw. Verriegelung der Arretierungseinrichtung 5 erfolgt mittels einer Betätigungseinrichtung 7 die hier in Form einer Hülse oder Schiebemuffe ausgebildet ist. An der Außenseite der Betätigungseinrichtung 7 ist hierzu wenigstens eine umlaufende Nut 17 vorgesehen, an der die Betätigungseinrichtung 7 gegriffen werden kann und hier zur rechten Seite hingezogen werden kann. Hierdurch werden dann die vorderen, verdickten Enden der Spannzangen frei und können in Radialrichtung aufgrund der Wirkung der Ringfeder 6 nach außen aufspreizen, so daß der Sicherheitsverschluß 1 von dem Anschlußnippel 2 gezogen werden kann. Die Verbindung erfolgt natürlich in umgekehrter Reihenfolge, wie dies grundsätzlich auch in der DE-GM 92 16 647 beschrieben ist.

Von wesentlicher Bedeutung ist nunmehr der zentral im Stopfen 3 axial beweglich gelagerte Kolben 8, der über einem zugehörigen Ring 8a mit einem Verriegelungselement 9 in Verbindung steht. Dieses Verriegelungselement 9 ist in einer (oder mehreren) Querbohrung(-en) 3c innerhalb des Stopfens 3 gelagert und in Radialrichtung beweglich. Es sei darauf hingewiesen, daß anstatt der hier gewählten Kugelform auch radial bewegliche Bolzen oder Stifte als Verriegelungselement 9 dienen können. Der Ring 8a wird hierbei von einer Druckfeder 8b in Richtung auf den Anschlußnippel 2 zu beaufschlagt, so daß der Ring 8a und der Kolben 8 an entsprechenden Absätzen innerhalb des Stopfens 3 angeschlagen sind. Die Funktionsweise des Kolbens 8 und des Verriegelungselements 9 wird weiter unten im Zusammenhang mit Fig. 2 näher erläutert.

Innerhalb des Kolbens 8 ist des weiteren eine Entlüftungsvorrichtung 10 vorgesehen, die im wesentlichen bolzenförmig aufgebaut ist und mittels einer Dichtung 11 gegenüber dem Kolben 8 abgedichtet ist. Wenn somit bei einer Beschädigung der Dichtung 12 oder einem Klemmen des Dichtkegels 12a Gas in den Anschlußbereich eintritt (punktiert angedeutet), wird durch die Dichtungen 4 und 11 ein weiteres Austreten aus dem Sicherheitsverschluß 1 unterbunden. Zum Entlüften kann jedoch die Entlüftungsvorrichtung 10 durch axiale Beaufschlagung betätigt werden, wodurch sich die Abdichtung an der Dichtung 11 löst und somit Leckgas über die mit Spielpassung montierten Teile austreten kann. Hierzu ist die Entlüftungsvorrichtung 10 bevorzugt mit einem Druckknopf 18 ausgestattet, der über einen Querstift 18a mit einem zentralen Dichtbolzen 18b verbunden ist, dessen verbreitertes Ende 18c an der Dichtung 11 anliegt. Durch eine Feder 18d wird hierbei der Bolzen 18b nach außen hin beaufschlagt, so daß der Dichtabschnitt 18c an der Dichtung 11 anliegt.

Der Kolben 8 ist weiterhin mittels einer Dichtung 13 gegenüber dem Stopfen 3 abgedichtet, so daß auch bei einer in Fig. 2 dargestellten Verschiebebewegung Leckgas nicht zwischen dem Stopfen 3 und dem Kolben 8 austreten kann, außer daß die Entlüftungsvorrichtung 10 betätigt wird. Der Druckknopf 18 der Entlüftungsvorrichtung 10 ist weiterhin in einem Halterungsring 14 geführt, der mittels eines Sprengringes 15 in dem Stopfen 3 gehaltert ist und zudem zur Abstützung der auf den Kolben 8 wirkenden Feder 8b dient. An der Außenseite des Stopfens 3 ist zudem ein Ring 16 angeordnet, der als Abstützung für Ring- und Mittelfinger dient, wenn der Druckknopf 18 mittels des Daumens betätigt wird.

In Fig. 2 ist der Sicherheitsverschluß gemäß Fig. 1 dargestellt, jedoch in einer die Betätigung der Betätigungseinrichtung 7 verriegelnden Stellung für den Fall, daß beispielsweise durch eine beschädigte Dichtung 12 im Inneren des Sicherheitsverschlusses 1 ein übermäßig hoher Druck herrschen sollte. Dieser Leckgasdruck (punktiert dargestellt) verschiebt hierbei den über die Dichtungen 11 und 13 abgedichteten Kolben 8 gegen die Wirkung der Feder 8b nach rechts, so daß das Verriegelungselement 9 radial nach außen geschoben wird, wobei die hier bevorzugt vorgesehene Verriegelungskugel in eine Nut 7a der Betätigungseinrichtung 7 eingreift. Im Unterschied zu der Position in Fig. 1 sei darauf hingewiesen, daß das Verriegelungselement 9 selbst bei großer Kraftanwendung nicht radial nach innen gedrückt werden kann, da es durch die ringförmige Steuerfläche 8c an dem zum Kolben 8 gehörigen Ring 8a daran gehindert wird, radial nach innen verschoben zu werden. Demgegenüber ist es in der Position gemäß Fig. 1 möglich, daß die Verriegelungskugel 9 beim Ziehen an der Betätigungseinrichtung 7 radial nach innen gedrängt wird, da sich der Ring 8a gegenüber der Anpreßkraft der Feder 8b geringfügig nach rechts verschieben kann und somit die Verriegelungskugel 9 in die nutförmige Steuerfläche 8c einfällt. Es sei darauf hingewiesen, daß anstatt der hier nutförmigen Steuerfläche 8c auch ein Konus oder dgl. vorgesehen sein kann. Wesentlich ist jedoch, daß an dem Kolben 8 bzw. an dem hier aus Montagegründen vorgesehenen, dem Kolben 8 zugeordneten Ring 8a eine Steuerfläche 8c vorgesehen ist, die das Verriegelungselement 9 formschlüssig in der Betätigungseinrichtung 7 festhält, wie dies in Fig. 2 dargestellt ist. Erst nach Betätigen der Entlüftungsvorrichtung 10 und damit dem Druckabbau in dem punktierten Bereich kehrt der Kolben 8 aufgrund der Anpreßkraft der Feder 8b in die Stellung gemäß der Fig. 1 zurück, so daß das Verriegelungselement 9 in Radialrichtung wieder beweglich wird und in die Nut der Steuerfläche 8c eingreifen kann, wodurch dann die bevorzugt als Schiebemuffe ausgebildete Betätigungseinrichtung 7 zurückgezogen werden kann.

Wie aus Fig. 2 ersichtlich, ragt bei erhöhtem Druck der Druckknopf 18 gegenüber dem Halterungsring 14 heraus, so daß dies als Druckanzeige verwendet werden kann, indem z. B. am Außenumfang des Druckknopfes 18 Farbmarkierungen oder sonstige Markierungen wie Ziffern vorgesehen sind. Hieran kann auch der Verschleißzustand der innenliegenden Dichtung 12 abgelesen werden und für entsprechende Reparatur oder Wartung gesorgt werden.

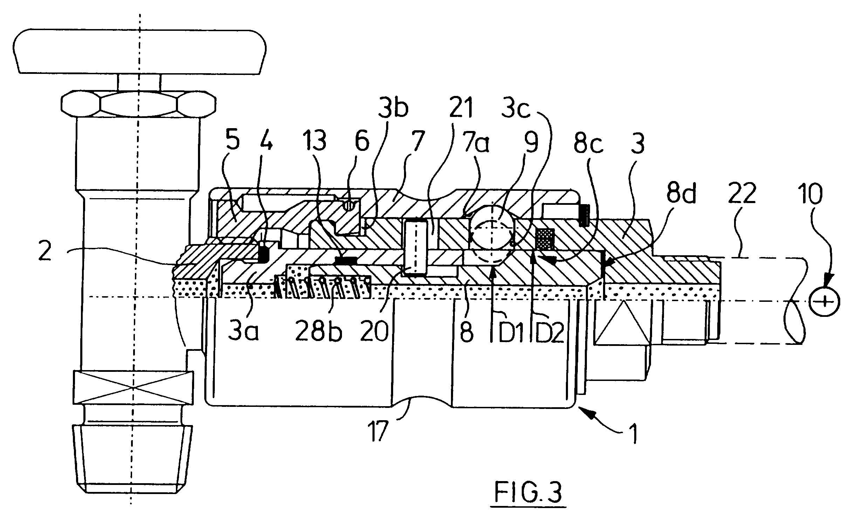

In Fig. 3 ist eine modifizierte Ausführungsform des Sicherheitsverschlusses 1 dargestellt, der hier an einem Anschlußnippel 2 eines Gas-Befüllventiles für Gasflaschen angeschlossen ist. Die übereinstimmenden Bauteile sind hierbei mit gleichen Bezugszeichen versehen. Insbesondere ist hierbei in übereinstimmung mit der Ausführungsform gemäß den Figuren 1 und 2 ein rohrförmiger Stopfen 3 vorgesehen, an dessen vorderen, zum Anschlußnippel 2 hin gelegenen Ende an einem Einstich 3b die Arretierungseinrichtung 5 in Form von Spannzangen gelagert ist. Die Spannzangen 5 und der Stopfen 3 sind hierbei von einer Betätigungsvorrichtung 7 in Form einer Schiebemuffe umgeben, die an ihrem Außenumfang eine umlaufende Nut 17 aufweist. An der Innenfläche der Betätigungsvorrichtung 7 ist wiederum eine Ringnut 7a ausgebildet, in die ein Verriegelungselement 9 in Form einer Kugel eingreift. Diese Verriegelungskugel ist hierbei wiederum in einer Querbohrung 3c des Stopfens 3 radial beweglich aufgenommen. An der Innenmantelfläche des Stopfens 3 ist wiederum ein axial verschiebbarer Kolben 8 vorgesehen, der somit parallel zur Schiebemuffe 7 beweglich ist. Der Kolben 8 weist an seiner Außenumfangsfläche wiederum eine Steuerfläche 8c auf, die durch unterschiedliche Außendurchmesser D1 und D2 gebildet ist. In der hier dargestellten Stellung des Kolbens 8 liegt der kleinere Durchmesser D1 der Steuerfläche 8c dem Verriegelungselement 9 gegenüber, so daß dieses durch Entlanggleiten an der Querbohrung 3c nach innen in Anlage zu dem Durchmesserbereich D1 gelangen kann, wodurch die Verriegelung mit der Nut 7a der Betätigungsvorrichtung 7 aufgehoben wird und somit die Schiebemuffe hier nach rechts gezogen werden kann.

In der Verriegelungsstellung des Sicherheitsverschlusses 1, also dann wenn ein Anschluß- oder Leckgasdruck im Innern des Sicherheitsverschlusses wirksam ist, ist der Kolben 8 gegenüber der hier gezeigten Stellung gegen die Federkraft einer Druckfeder hier nach links verschoben, so daß der größere Durchmesser D2 der Steuerfläche 8c das Verriegelungselement 9 nach außen in den formschlüssigen Eingriff mit der umlaufenden Nut 7a drückt. Hierdurch wird die Schiebemuffe 7 verriegelt, so daß ein Abziehen des Sicherheitsverschlusses 1 zuverlässig verhindert wird.

Im Unterschied zu der Ausführungsform gemäß Fig. 1 und 2 ist hierbei der Dichtabschnitt 3a mit der Dichtung 4 gegenüber dem Stopfen 3 geringfügig axial innerhalb des Stopfens 3 gelagert, jedoch in einem geringeren Ausmaß als die mögliche Axialbewegung des Kolbens 8. Diese geringfügige Axialbewegung des hülsenförmigen Dichtabschnittes 3a dient dazu, daß der Dichtabschnitt immer zuverlässig an dem Anschlußnippel 2 anliegt. Die geringfügige Axialbewegung des hülsenförmigen Dichtabschnittes 3a wird hierbei durch einen querverlaufenden Stift 20 begrenzt, der innerhalb eines Langloches 21 im Stopfen 3 geführt ist. Die umfangsseitige Abdichtung zwischen dem Dichtabschnitt 3a und dem Kolben 8 wird dabei durch einen Dichtungsring 13 sichergestellt. Als weiterer Unterschied ist hierbei an dem hier rechten Ende des Stopfens 3 eine schematisch angedeutete Anschlußleitung 22 angeschlossen, mit der der Sicherheitsverschluß mit Druck beaufschlagt wird, um beispielsweise an dem Anschlußnippel 2 und daran angeschlossener, nachgeordneter Bauteile, wie z. B. Gasflaschen oder Gastanks unter Druck Gas einzufüllen. In diesem Falle kann die Entlüftungsvorrichtung 10 zum Druckabbau auch entfernt von dem Sicherheitsverschluß angeordnet sein. In einfachster Weise wird dabei die Entlüftungsvorrichtung 10 durch ein nicht näher dargestelltes Druckventil einer Befüllanlage gebildet, so daß nach Schließen dieses Befüllventiles im Bereich des Dichtungsabschnittes 3a ein reduzierter Druck vorliegt. Während des Befüllvorganges mit erhöhtem Druck gelangt das zu befüllende Medium auch zu einer stirnseitigen Kolbenfläche 8d, wodurch der Kolben im Innern des Sicherheitsverschlusses 1 axial zum Anschlußnippel 2 hin verschoben wird. Durch diese axiale Verschiebebewegung gelangt der Kolben 8 zum einen in Anschlag mit dem hülsenförmigen Dichtabschnitt 3a, so daß dieser zusätzlich mit der Dichtung 4 an den Anschlußnippel 2 angedrückt wird, so daß sich eine Erhöhung des Dichteffektes ergibt. Weiterhin wird dadurch die bislang im kleineren Durchmesser D1 der Steuerfläche 8c liegende Verriegelungskugel 9 nach außen in formschlüssigen Eingriff mit der Betätigungsvorrichtung 7 gedrückt, und zwar durch den Teil der Umfangsfläche des Kolbens 8 mit dem größeren Durchmesser D2. Solange somit durch die Fluidleitung 22, wie punktiert angedeutet, Gas oder Flüssigkeit mit erhöhtem Druck zugeführt wird, bleibt die Betätigungsvorrichtung 7 verriegelt. Erst wenn der im Bereich des Dichtabschnittes 3a herrschende Druck zumindest reduziert oder vollständig abgebaut wird ("Entlüftungsstellung"), wird der Kolben 8 wieder in die hier gezeichnete Stellung nach rechts zurückgeschoben, und zwar mit Unterstützung der Anpreßfeder 28b. Durch entsprechende Auswahl der Federstärke der Feder 28b, die in der Funktion im wesentlichen der Anpreßfeder 8b in den Figuren 1 und 2 entspricht, läßt sich somit der Verriegelungs- bzw. Entriegelungsdruck des Sicherheitsverschlusses 1 genau einstellen, z. B. auf 4 bar. Über diesem Ansprechdruck ist ein Abziehen des Sicherheitsverschlusses 1 unmöglich.

## Patentansprüche

1. Sicherheitsverschluß, insbesondere für Fahrzeug-Gastanks, umfassend:
- einen Stopfen (3) mit einem an die öffnung eines Anschlußnippels (2) ansetzbaren Dichtabschnitt (3a);
- eine Arretierungseinrichtung (5), insbesondere in Form von Spannzangen, mit der der an den Anschlußnippel (2) angesetzte Stopfen (3) lösbar mit dem Anschlußnippel (2) verbindbar ist;
- eine Betätigungsvorrichtung (7), insbesondere in Form einer Schiebemuffe; und
- eine Entlüftungsvorrichtung (10) zum Druckabbau, die mit dem Anschlußnippel (2) im Bereich des Dichtabschnittes (3a) in Verbindung steht,
dadurch gekennzeichnet, daß
im Inneren des Sicherheitsverschlusses (1) ein auf Druck ansprechender, axial verschiebbarer Kolben (8) vorgesehen ist, der mit einem Verriegelungselement (9) für die Betätigungsvorrichtung (7) gekoppelt ist.

2. Sicherheitsverschluß nach Anspruch 1,
dadurch gekennzeichnet, daß
das Verriegelungselement (9) durch wenigstens eine Kugel gebildet ist, die in eine Ringnut (7a) an der Betätigungsvorrichtung (7) eingreifbar gelagert ist.

3. Sicherheitsverschluß nach Anspruch 1 oder 2,
dadurch gekennzeichnet, daß
das Verriegelungselement (9) in einer radial verlaufenden Bohrung (3c) in dem Stopfen (3) gelagert ist.

4. Sicherheitsverschluß nach einem der Ansprüche 1 bis 3,
dadurch gekennzeichnet, daß
der Kolben (8) von einer Anpreßfeder (8b) in Richtung auf den Anschlußnippel (2) beaufschlagt ist.

5. Sicherheitsverschluß nach Anspruch 4,
dadurch gekennzeichnet, daß
die Anpreßfeder (8b) zur Einstellung des Verriegelungsdruckes auswechselbar im Sicherheitsverschluß (1) gelagert ist.

6. Sicherheitsverschluß nach Anspruch 5,
dadurch gekennzeichnet, daß
zum Austausch der Anpreßfeder (8b) ein von außen zugänglicher Halterungsring (14) vorgesehen ist, der mittels eines Sicherungselementes (15) am Stopfen (3) befestigt ist.

7. Sicherheitsverschluß nach einem der Ansprüche 1 bis 6,
dadurch gekennzeichnet, daß
mit dem Kolben (8) ein zentraler Bolzen (18b) gekoppelt ist, der gegenüber dem Stopfen (3) relativ beweglich ist und diese Relativbewegung als Druckanzeige vorgesehen ist.

8. Sicherheitsverschluß nach Anspruch 7,
dadurch gekennzeichnet, daß
der Bolzen (18b) zugleich als Bestandteil der Entlüftungsvorrichtung (10) ausgebildet ist.

9. Sicherheitsverschluß nach Anspruch 7 oder 8,
dadurch gekennzeichnet, daß
an dem Bolzen (18b) ein Druckknopf (18) zur Betätigung der Entlüftungsvorrichtung (10) befestigt ist.

10. Sicherheitsverschluß nach Anspruch 9,
dadurch gekennzeichnet, daß
der Druckknopf (18) an der von dem Anschlußnippel (2) abgewandten Stirnseite vertieft angeordnet ist.

11. Sicherheitsverschluß nach einem der Ansprüche 1 bis 10,
dadurch gekennzeichnet, daß
der Kolben (8) am Außenumfang eine Steuerfläche (8c) mit unterschiedlichen Außendurchmessern (D1, D2) aufweist, die in einer ersten Stellung des Kolbens (8) das Verriegelungselement (9) in formschlüssigem Eingriff mit der Betätigungsvorrichtung (7) hält, während in einer zweiten Stellung des Kolbens (8) das Verriegelungselement (9) außer Eingriff mit der Betätigungsvorrichtung (7) ist.

## Claims

1. Safety lock, especially for vehicle fuel tanks, comprising:
- a plug (3) with a sealing portion (3a) mountable to the opening of a connector fitting (2);
- a locking device (5), especially in the shape of collets, by means of which said plug (3) mounted to said connector fitting (2) is releasably connectable to said connector fitting (2);
- an actuating device (7), especially in the shape of a sliding sleeve; and
- an evacuation device (10) for pressure release, which communicates with said connector fitting (2) in the region of the sealing portion (3a),
characterized in that
there is provided in the interior of said safety lock (1) a pressure-responsive, axially displaceable piston (8) which is coupled to a locking member (9) for locking said actuating device (7).

2. Safety lock according to claim 1, characterized in that the locking member (9) is formed by at least one ball which is supported on the actuating device (7) and adapted to engage an annular groove (7a).

3. Safety lock according to claim 1 or claim 2, characterized in that said locking member (9) is mounted in a radially extending bore (3c) in said plug (3).

4. Safety lock according to any of claims 1 to 3, characterized in that the piston (8) is urged by a pressure spring (8b) in the direction of the connector fitting (2).

5. Safety lock according to claim 4, characterized in that said pressure spring (8b) is mounted in said safety lock (1) in an interchangeable manner in order to adjust the locking pressure.

6. Safety lock according to claim 5, characterized in that an externally accessible securing ring (14) is provided to assist in interchanging said pressure spring (8b), said securing ring (14) being secured to the plug (3) by means of a securing member (15).

7. Safety lock according to any of claims 1 to 6, characterized in that there is coupled to the piston (8) a central bolt (18b) which is movable relative to the plug (3), and this relative movement is provided as a pressure indication.

8. Safety lock according to claim 7, characterized in that said bolt (18b) is formed as a component of said evacuation device (10) as well.

9. Safety lock according to claim 7 or claim 8, characterized in that there is attached to the bolt (18b) a press-button (18) for actuating the evacuation device (10).

10. Safety lock according to claim 9, characterized in that the press-button (18) is disposed in a countersunk manner on the end face facing away from the connector fitting (2).

11. Safety lock according to any of claims 1 to 10, characterized in that the piston (8) has on the outer periphery a control surface (8c) with different external diameters (D1, D2), which in a first position of the piston (8) holds the locking member (9) in positive engagement with the actuating device (7) while in a second position of the piston (8) the locking member (9) is disengaged from the actuating device (7).

## Revendications

1. Fermeture de sécurité, notamment pour des réservoirs de carburant gazeux de véhicules, comprenant :
- un bouchon (3) avec une partie d'étanchement (3a) pouvant être appliquée contre l'ouverture d'un manchon de raccordement (2) ;
- un dispositif de blocage (5), notamment sous la forme de pinces de serrage, par lequel le bouchon (3) appliqué contre le manchon de raccordement (2) peut être assemblé de manière amovible au manchon de raccordement (2) ;
- un dispositif d'actionnement (7), notamment sous la forme d'un manchon coulissant; et
- un dispositif d'évacuation d'air (10) pour la suppression de la pression, qui communique avec le manchon de raccordement (2) dans la région de la partie d'étanchement (3a),
**caractérisée** en ce qu'un piston (8) pouvant coulisser axialement, réagissant à la pression, est prévu à l'intérieur de la fermeture de sécurité (1) et est couplé à un élément de verrouillage (9) pour le dispositif d'actionnement (7).

2. Fermeture de sécurité selon la revendication 1, **caractérisée** en ce que l'élément de verrouillage (9) est formé par au moins une bille, qui est montée avec possibilité d'engagement dans une rainure annulaire (7a) sur le dispositif d'actionnement (7).

3. Fermeture de sécurité selon la revendication 1 ou 2, **caractérisée** en ce que l'élément de verrouillage (9) est monté dans le bouchon (3) dans un perçage (3c) s'étendant radialement.

4. Fermeture de sécurité selon une des revendications 1 à 3, **caractérisée** en ce que le piston (8) est sollicité en direction du manchon de raccordement (2) par un ressort de pression (8b).

5. Fermeture de sécurité selon la revendication 4, **caractérisée** en ce que le ressort de pression (8b) est, afin de régler la pression de verrouillage, monté avec possibilité de remplacement dans la fermeture de sécurité (1).

6. Fermeture de sécurité selon la revendication 5, **caractérisée** en ce qu'en vue du remplacement du ressort de pression (8b), il est prévu une bague de fixation (14) accessible de l'extérieur, qui est fixée sur le bouchon (3) au moyen d'un élément d'arrêt (15).

7. Fermeture de sécurité selon une des revendications 1 à 6, **caractérisée** en ce qu'un tampon central (18b), accouplé au piston (8), est mobile par rapport au bouchon (3), ce mouvement relatif étant prévu comme indication de pression.

8. Fermeture de sécurité selon la revendication 7, **caractérisée** en ce que le tampon (18b) est conçu en même temps comme élément du dispositif d'évacuation d'air (10).

9. Fermeture de sécurité selon la revendication 7 ou 8, **caractérisée** en ce qu'un bouton-poussoir (18) est fixé sur le tampon (18b) pour l'actionnement du dispositif d'évacuation d'air (10).

10. Fermeture de sécurité selon la revendication 9, **caractérisée** en ce que le bouton-poussoir (18) est disposé en retrait sur le côté frontal qui est opposé au manchon de raccordement (2).

11. Fermeture de sécurité selon une des revendications 1 à 10, **caractérisée** en ce que le piston (8) présente, sur sa périphérie extérieure, une face de commande (8c) présentant des diamètres extérieurs différents (D1, D2) qui, dans une première position du piston (8), maintient l'élément de verrouillage (9) en engagement positif avec le dispositif d'actionnement (7), tandis que, dans une seconde position du piston (8), l'élément de verrouillage (9) est désengagé du dispositif d'actionnement (7).
